# EUROPEAN PATENT SPECIFICATION

(11) **EP 3 481 597 B1**
(45) Date of publication and mention of the grant of the patent: **13.05.2020**
(21) Application number: 17742547.7
(22) Date of filing: 26.06.2017
(51) Int. Cl.: B25J 5/00, B25J 5/02, B25J 11/00, B25J 15/08, A01J 27/00

(54) **MANIPULATOR OF FOODS IN A WAREHOUSE**
MANIPULATOR VON LEBENSMITTELN IN EINEM LAGER
MANIPULATEUR D'ALIMENTS DANS UN ENTREPÔT

(30) Priority: 07.07.2016 IT 201600071117
(43) Date of publication of application: 15.05.2019
(73) Proprietor: Imaginalis S.r.l., 50019 Sesto Fiorentino (Firenze) (IT); Ing. Ferretti S.r.l. A Socio Unico, 42020 Quattro Castella (Reggio Emilia) (IT)
(72) Inventor: FORTUNA, Damiano, 50067 Rignano Sull'Arno (Firenze) (IT); MANETTI, Leonardo, 52025 Montevarchi (Arezzo) (IT); BETTINI, Sandro, 50038 Scarperia e San Piero (Firenze) (IT)
(74) Representative: Lunati & Mazzoni S.r.L.
(86) International application number: PCT/IB2017/053801
(87) International publication number: WO 2018/007895

(56) References cited:
- EP-A1- 0 316 281
- EP-A1- 1 941 794
- CH-A5- 685 226
- US-A1- 2015 321 369

## Description

The present invention relates to a manipulator of foods in a warehouse of the type specified in the preamble of the first claim.

In particular, the object of the invention is suitable for manipulating and, more precisely, moving food, allowing its inspection and consequent evaluation of the maturing period. More specifically, it is suitable for manipulating and allowing the evaluation of the maturing period of cheese forms, such as Pecorino, Parmesan or Grana cheese.

The inspection of foods, such as cheese forms involves an evaluation of the outer appearance, structure and olfactory characteristics of the paste.

The evaluation is carried out by an operator who uses a hammer to hit the cheese form and pierce it with a handle and, in some cases, a needle to take a sample. The operator evaluates the standard and quality of the maturity according to the response of the cheese form.

The forms are classified according to the results by means of applying stamps into: first category ("first grade", "zero" and "one"); second category ("medium grade" cheese); or third category ("downgraded" and "reject").

A similar inspection is also carried out on hams, salamis, sausages in general or other matured foods.

Manipulators are disclosed in EP0316281; CH685226 and EP1941794.

The previously described prior art presents a number of important inconveniences.

One first inconvenience is that manipulators do not assist operators with the inspection, which is, in fact, carried out manually.

One inconvenience is that the food is often placed randomly at the end of the inspection, making it subsequently difficult to locate.

One inconvenience is that the inspection is based only on subjective evaluations by operators. Therefore, top quality foods can mistakenly be classified as rejects or top quality foods as foods with flaws.

This translates into marketing poor quality foods as first class, resulting in a decline in image and, in the long term, reduced sales.

In order to overcome said inconveniences, some foods undergo destructive testing.

This testing is carried out randomly and is therefore unable to guarantee the high quality of all foods, as well as increasing rejects and costs.

Another inconvenience is that the cutting of the food only highlights flaws, which are visible in the area of the cut and doesn't allow other areas to be evaluated.

It is specified that the previously described inconveniences are accentuated by the need to carry out periodic inspections on all foods.

In this case, the technical task at the root of the present invention is to develop a manipulator capable of overcoming the stated inconveniences.

An important object of the invention, within the scope of said technical task, is to obtain a manipulator, which carries out quick, precise controls on food and, in particular, on cheese forms.

Another object of the invention is to create a manipulator of foods that carries out inspections without cutting the food or carrying out destructive testing.

The technical task and specified aims are achieved with a manipulator of foods in a warehouse as claimed in the accompanying Claim 1.

Preferred embodiments are highlighted in the sub claims.

The characteristics and advantages of the invention are clarified below by a detailed description of a preferred embodiment of the invention, with reference to the accompanying drawings, wherein:

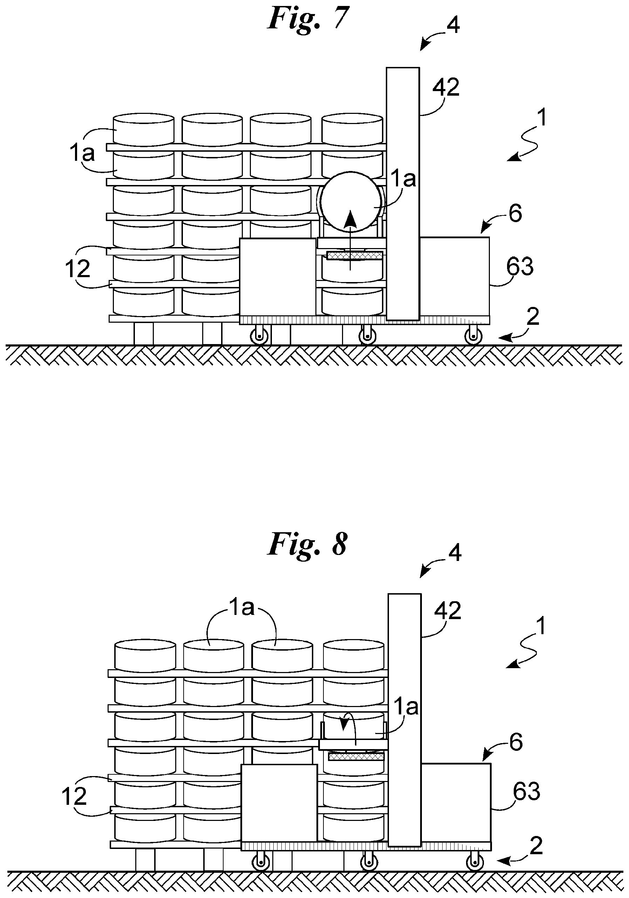

**Figures 1-8** show the manipulator of foods in different moments;
**Figure 9** illustrates a sectional assembly of the manipulator;
**Figure 10** highlights another sectional assembly of the manipulator; and
**Figure 11** presents a block diagram of the manipulator.

In this document, when measurements, values, shapes and geometrical references (such as perpendicularity and parallelism) are associated with words, such as "approximately" or other similar terms, for example "practically" or "substantially", they shall be understood as without errors of measurement or inaccuracies resulting from production and/or manufacturing errors and, above all, without a slight divergence from the value, measurement, shape or geometrical reference with which it is associated. For example, if said terms are associated with a value, they preferably indicate a divergence of no more than 10% of the same value.

Furthermore, when terms such as "first", "second", "greater", "lower", "principal" and "secondary" are used, they do not necessarily identify an order, a relationship priority or relative position, but they may simply be used to distinguish different components more clearly.

Unless otherwise specified, as in the following considerations, terms such as "processing", "computing", "determination", "calculation", or the like, refer to the action and/or processes of a computer or a similar electronic calculation device, which manipulates and/or transforms data represented as physical, such as electronic magnitudes of information system registers and/or memories into other data similarly represented as physical quantities inside information systems, registers or devices for the memorisation, transmission or visualisation of information.

With reference to the stated Figures, according to the invention, the manipulator of foods in a warehouse is globally indicated with number **1.**

It is suitable for being used to analyse foods **1a** situated in a warehouse **10** comprising a plurality of storage stations **1b.** Food 1a is associated with one or more of the stations 1b or preferably with each of them.

The warehouse 10 can be a warehouse for maturing foods 1a, such as sausages and cheeses. It is preferably a warehouse for maturing cheeses (such as Parmesan or Grana cheese) and specifically a shelving for maturing foods. Besides at least one manipulator 1, the warehouse 10 comprises one or more shelves **11** each comprising at least one level **12** defining a corridor inside which the manipulator can move along the shelf.

Each level 12 has at least one station 1b for foods 1a that are being matured.

If the warehouse 10 has several shelves 11, it can comprise one or more supplementary corridors diagonal to the corridors, suitable for allowing the manipulator 1 to pass from one corridor to another.

Alternatively or in addition, one or more storage stations 1b are identifiable in a trolley or another similar handler different from the manipulator 1, suitable for bringing one or more foods 1a in correspondence with the manipulator 1.

The manipulator 1 can comprise a translator **2** suitable for defining relative movement between the manipulator 1 and the storage station 1b and, in particular, for moving the manipulator 1, opportunely positioning it in correspondence with a storage station 1b and consequently with the food 1a.

The translator 2 is suitable for moving the manipulator 1 along a corridor, preferably along the one or more supplementary corridors.

It is identifiable in a trolley (opportunely motorised, such as an automated guided vehicle) suitable for sliding along tracks, which are opportunely integral with one or more shelves 11. Alternatively, it is identifiable in a trolley and for example, in an AGV (automated guided vehicle) preferably with a coloured band, triangulation, magnetic or GPS drive-by-wire system.

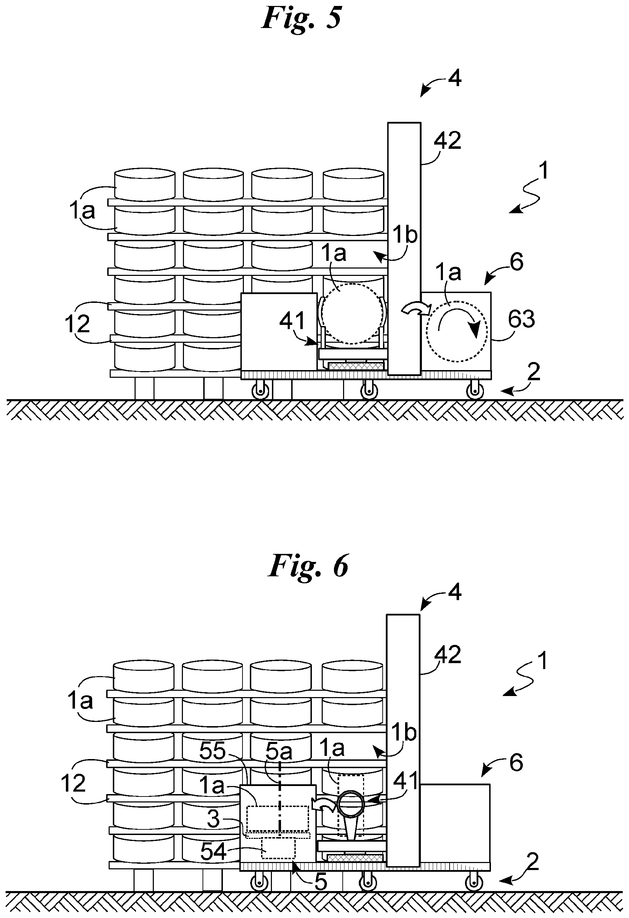

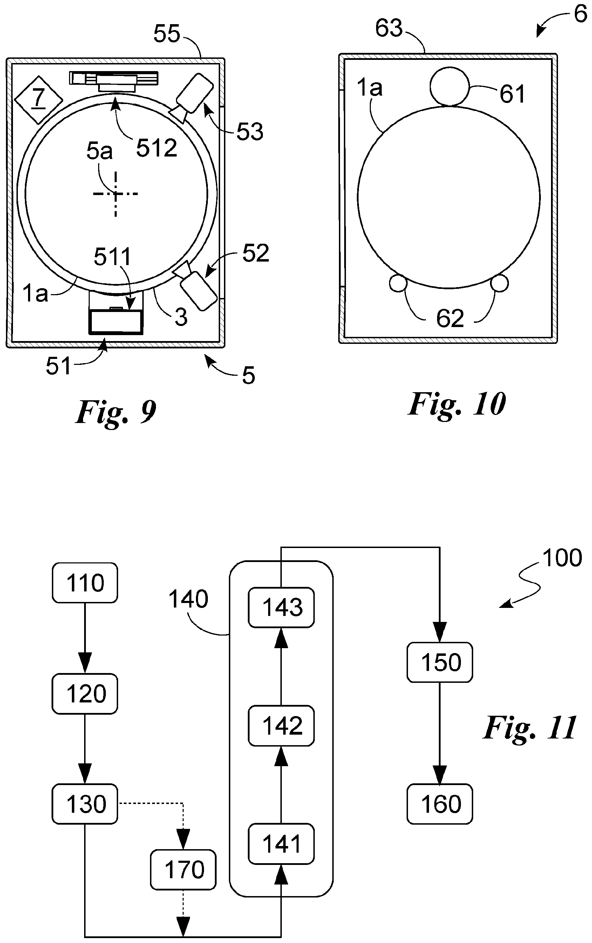

The manipulator 1 can comprise at least one analysis station **3** (Figures 6 and 9) wherein the food 1a inspection is carried out.

The manipulator 1 preferably comprises a single station 3.

The analysis station 3 can be integral with the translator 2, consequently defining relative movement between the storage station 1b and the analysis station 3 and, in particular, it is suitable for positioning the analysis station 3 side by side with at least one storage station 1b.

The manipulator 1 can comprise a pick-up member **4** suitable for moving the food 1a between the analysis 3 and storage stations 1b.

The pick-up member 4 can be integral with the translator 2.

The pick-up member 4 is able to pick up the food 1a from the storage station 1b. In particular, the translator 2 is suitable for positioning the pick-up member 4 in correspondence with one or more storage stations 1b.

The pick-up member 4 comprises a gripper **41** for picking up the food 1a; and a kinematic chain, open, closed or partially closed, constraining the gripper 41 to the translator 2 and suitable for moving the gripper 41 in relation to the translator 2.

The member 4 can comprise at least one linear actuator **42,** interposed between the kinematic chain and the translator 2, suitable for moving the kinematic chain vertically, in other words parallel to the gravitational gradient.

The manipulator 1, associated with the translator 2, can comprise an inspection device **5** (Fig. 9) for the food 1a in the analysis station 3.

The inspection device 5 can be supported and in particular integral with the translator 2, which is consequently suitable for positioning the device 5 in correspondence with one or more storage stations 1b.

The inspection device 5 comprises at least one food 1a acquisition block in the analysis station 3; and the manipulator 1 can comprise a reconstruction system in data connection with the inspection device 5 and, specifically, with the acquisition block, suitable for making at least one food 1a image based on the acquisition.

The reconstruction system can be moveable by the translator 2 and, for example, integral with the rest of the device 5 or unmovable by the translator 2 and consequently separate from the rest of the inspection device 5.

The inspection device 5 is suitable for creating a radiological image of said food 1a. It comprises a radiological acquisition block **51** suitable for making at least one radiological acquisition of the food 1a; and the reconstruction system creates a radiological image of the food.

The block 51 comprises an emission source **511** along an emission axis; and a detector **512** opposite said source 511 in relation to the analysis station 3.

The source 511 can comprise an X-ray emitter and, in some cases, a tilt system suitable for rotating the emitter around an axis passing through the focal spot, which is opportunely almost perpendicular to the emission axis.

The detector 512 comprises a surface that is sensitive to X-rays normal to the emission axis.

The distance between the focal spot and the sensitive surface is practically between 1.4 and 0.2 m.

The detector 512 can comprise a waver suitable for translating the sensor along a waving axis parallel to the sensitive surface; and/or a lifter suitable for translating the sensor along the emission axis.

In the case of the radiological source 511, the sensor can comprise at least one of the following: a linear sensor (preferably two per practically coplanar sensitive surfaces); a flat panel preferably suitable for varying the extension of the active sensitive surface; a direct photon-counting sensor; a dual energy; a sensor with the concavity facing the source 511; a sensor with a flat or concave variable geometry.

The inspection device 5 can make an optical recording of the outer surface of the food 1a. It can comprise an optical acquisition block **52** suitable for making at least one optical acquisition of the food 1a in the analysis station 3; and the reconstruction system is suitable for creating an optical image, specifically 3D/three-dimensional, of the outer surface of the food 1a.

The optical acquisition block 52 comprises at least one optical video camera and, in particular, at least two optical video cameras suitable for recording the food 1a at different inclinations and specifically, at the same time; and the reconstruction system is suitable for using the optical acquisitions at different angles, to create a 3D optical image of the food 1a.

Furthermore, the inspection device 5 can make a thermographic recording of the food 1a. It can comprise a thermographic acquisition block **53** suitable for making a thermographic acquisition of the food 1a in the analysis station 3; and the reconstruction system can use said acquisition for a thermographic image, preferably 3D, of the food 1a.

The thermographic acquisition block 53 can comprise a thermographic video camera and, specifically, at least two thermographic video cameras suitable for recording at different inclinations and, preferably, at the same time; and the reconstruction system is suitable for using said acquisitions to create a 3D thermographic image of the food 1a.

The inspection device 5 preferably comprises thermographic 53, optical 52 and radiological 51 acquisition blocks.

Advantageously, the device 5 is suitable for creating a tomographic image of the food 1a. In particular, the radiological acquisition block 51 is suitable for making radiological acquisitions at different angles; and the reconstruction system is suitable for using these radiological acquisitions to create a tomographic image that allows the geometry and size of any flaws in the food 1a to be separated and evaluated, as well as the number of flaws present.

The reconstruction system is preferably suitable for using the optical acquisitions at different angles and the radiological acquisitions at different angles to make a single 3D image whose outer surface is the 3D optical image and the internal volume is the tomographic image.

More preferably, it is suitable for creating a single 3D image using the thermographic acquisitions at different angles, in addition to the radiological and optical acquisitions. The 3D image obtained is a superimposition of the tomographic and thermographic images.

It is specified how this composed image can be obtained by superimposing the pixels of the optical and/or thermographic image on the pixels of the outer surface of the tomographic image. Said superimposition can be achieved, for example, with the coordinates of the pixels available on acquisition known to the technician.

In order to create said tomographic image, the inspection device 5 can comprise a rotation member **54** suitable for defining a mutual rotation around a rotation axis **5a** between the analysis station 3 and at least the radiological acquisition block 51.

The rotation axis 5a is substantially perpendicular to the emission axis and parallel to the sensitive surface. In particular, at least in the case of food 1a, which is identifiable in a practically cylindrical-shaped object (cheese form), the axis 5a can coincide with the barycentric longitudinal axis of the food 1a 3.

The rotation member 54 can define a rotation radius, which is substantially different and, specifically, substantially greater than the rotation radius between the detector 512 and the food 1a.

The rotation radius between the source 511 and the food 1a is practically comprised between 0.3 m and 2 m and, in particular, between 0.5 m and 1.5 m and, more specifically, between 0.7 m and 1.3 m. It is preferably practically equal to 1 m.

The rotation radius between the detector 512 and the food 1a is substantially lower than 1.5 m, specifically it is practically comprised between 0.1 m and 1 m and more specifically between 0.1 m and 0.7 m and even more specifically between 0.1 m and 0.5 m. Preferably, it is substantially equal to 0.3 m.

In addition, the rotation member 54 is suitable for defining a mutual rotation between the optical acquisition block 52 and the analysis station 3 and/or between the thermographic acquisition block 53 and the analysis station 3 around the rotation axis 5a. Specifically, it is suitable for defining a rotation axis 5a between blocks 51, 52 and 53 and the analysis station 3. More specifically, the rotation member 54 is suitable for defining a simultaneous rotation between the analysis station 3 and the acquisition blocks 51, 52 and 53.

The rotation member 54 can define said mutual rotation by rotating only the analysis station 3. In a first case (Figures 6 and 9), it can comprise control means for rotating the analysis station 3 around a rotation axis 5a that is preferably substantially vertical.

In a second case, the rotation member 54 can comprise one or more rollers (motorisable) that are suitable for defining the analysis station 3 and placing the barycentric longitudinal axis of the food 1a preferably practically horizontal (perpendicular to the gravitational gradient).

Alternatively, the rotation member 54 can hold the food 1a substantially still and rotate the one or more blocks 51, 52 and 53. Consequently, in a third case, it can comprise at least one circular guide defining the axis 5a preferably substantially vertical; at least one trolley each or more blocks; and a supporting plate defining the analysis station 3.

It is evidenced how, in the second and third case, the optical acquisition block 52 can comprise only one video camera and the pick-up member 4 tilts the food 1a. In the first case, the optical acquisition block 52 can include video cameras on opposite sides in relation to the analysis station 3.

The inspection device 5 can include a centring device, not shown in the figure, which is, for example, a spindle-type, suitable for ensuring the concentricity between the barycentric longitudinal axis of the food 1a and the rotation axis 5a. The inspection device 5 can comprise a pressure sensor in the analysis station 3 suitable for measuring the weight of the food 1a.

The inspection device 5 can comprise casing **55** defining: a space for the analysis station 3 at least the radiological acquisition block 51 and preferably blocks 52 and 53, the rotation member 54 and the centring device; and an opening to access the space for the food 1a.

Alternatively, the optical acquisition block 52 can be outside the casing 55. Another alternative is that the optical acquisition block 52 can comprise at least one optical video camera outside the casing 55 and at least one inside the casing 55.

The casing 55 is opportunely shielded from the X-rays.

The manipulator 1 can comprise a cleaning block **6** for the food 1a.

The cleaning block 6 is associated and, to be precise, integral with the translator 2.

The cleaning block 6 can comprise at least one brush **61** for the food 1a; optionally, handling means **62** (specifically radio transparent) suitable for moving the food 1a for a thorough clean; and, opportunely, supplementary casing **63** defining a supplementary storage space for the food to be cleaned, and a supplementary opening to access the supplementary space.

Alternatively, the brush 61 is inside the casing 55.

The cleaning block 6 can comprise suction means for the dust.

The manipulator 1, which is supported and in particular integral with the translator 2, can comprise a marker 7 for the food opportunely in the station 3.

The marker 7 is suitable for reproducing a food 1a identification code on the food.

Alternatively or in addition, the marker 7 is suitable for marking the food 1a according to the results of the inspection. For example, in the case of foods 1a identifiable in cheeses, it is suitable for marking the food 1a with a first mark if the food 1a is first class; a second mark if the food 1a is second class; and a third mark if it is third class.

The marker 7 is accessible in the space defined by the casing 55 (Fig. 9). Finally, the manipulator 1 can comprise a supplementary cleaning block **8** for the storage station 1b, which is integral with the pick-up member 4.

The manipulator 1 is opportunely automatic, in other words it is suitable for picking up, inspecting, replacing and preferably cleaning the food 1a without the aid of an operator.

For this purpose, it can comprise a control unit to operate the manipulator 1. The control unit is suitable for at least commanding, in sequence, the pick-up member 4 to move the food 1a from the storage station 1b to the analysis station, 3 placing the food 1a between the source 511 and the detector 512; the radiological acquisition block 51 to make the radiological acquisition; the reconstruction system to create the radiological image based on said radiological acquisition; and the member 4 to take the food 1a back from the analysis station 3 to the storage station 1b, which is opportunely identical or different from the storage station 1b, which it was taken from.

In addition, before commanding the pick-up member 4 to move the food 1a from the storage station 1b, the control unit is suitable for commanding the translator 2 to define a movement between the storage station 1b and the pick-up member 4, to take the food 1a from the storage station 1b and place it on the storage station 1b.

When the food 1a is in the analysis station 3, the control unit can carry out the inspection and, in some cases, command the marker 7 to mark the food 1a based on the results of the inspection.

Specifically, the control unit can carry out the inspection determining the presence of discontinuities in at least the radiological image and preferably in the tomographic one, associating at least one quality code with the food according to said discontinuities. More specifically, it can identify sectors of the food with a different presence of discontinuities and associate a quality code with each sector.

In addition, the control unit can determine the presence of discontinuities in the optical image and consequently associate the quality code with the food 1a according to the discontinuities in the optical and radiological image. Furthermore, it can determine the presence of discontinuities in the thermographic image and consequently associate the quality code with the food 1a according to the discontinuities in the thermographic and radiological image. The quality code is preferably defined according to the discontinuities in the thermographic, optical and radiological (specifically tomographic) images.

It is evidenced that the presence of flaws can be evaluated according to the size and/or concentration of the discontinuities in an image or in an image sector. Innovatively, the inventor takes advantage of the fact that when a material is recorded, it provides a response based on its physical-mechanical characteristics. Therefore, the inventor decided to use said knowledge to detect flaws (mould, cracks, holes or foreign bodies in the food 1a), whose physical mechanical characteristics are different to those of the food 1a. Thus, we have a different response, which is represented in the image by a point/area/volume with a different representation in relation to the adjoining portions. Said different graphical representation constitutes a discontinuity in the image.

The discontinuity in the image can preferably be identified in a variation between the adjoining pixels, which is at least equal to 10% and, to be precise, to 20%. For example, in a tomographic/radiological image, this variation is measured based on the intensity of each image pixel.

In addition, before taking the food 1a from the storage station 1b, the control unit can command the translator 2 to position the manipulator 1 near the storage station 1b of the food 1a to be inspected.

The control unit comprises an electronic board suitable for managing the functions of the manipulator 1 and a memory suitable for memorising the acquisitions of the acquisition blocks 51, 52 and 53, the images produced by the reconstruction system and consequently, the result of the inspection.

In particular, the control unit can comprise a food database opportunely in said memory.

The food database is suitable for associating an identification code with each item of food 1a in the warehouse 10, which is opportunely the same as the one reproduced by the marker 7 on the food; a station code identifying the storage station 1b of the food 1a; and at least one quality code indicating the quality of the food 1a obtained from the last inspection carried out on the food 1a.

In particular, the food database is suitable for associating with each item of food 1a in the warehouse 10 all of the data relating to the last inspection, in other words the images of the food 1a, at least one quality code indicating the quality of the food 1a and, preferably, the date of the last inspection.

More specifically, the food database is suitable for associating all of the data from all of the inspections with each item of food 1a in the warehouse 10.

In some cases, for at least one food 1a inspection, it can comprise several quality codes, each associated with a sector of food 1a.

The station code represents the coordinates of the storage station 1b where the food 1a is located.

Additionally, opportunely stored in said memory, the control unit can comprise a weight of reference for the food 1a and/or a variation function of the weight in time indicating, for example, the ideal weight variation of the food 1a during the maturing period.

The control unit can comprise at least one acceptability range for at least one image acquired that can be stored in the memory. In this case, the control unit identifies image pixels as discontinuities when their value does not fall within said at least one acceptability range.

Specifically, the control unit can comprise at least one radiological acceptability range for the radiological image and, more specifically, for the tomographic image.

Additionally, the control unit can comprise at least one optical acceptability range for at least the optical image and/or at least one thermographic acceptability range for at least the thermographic image.

It is evidenced how, for each type of image and, preferably, for at least the radiological image and, specifically, the tomographic image, the control unit can comprise various acceptability ranges. For example, in the case of a cheese form, the control unit can comprise an acceptability range for the crust/nail of the cheese and an acceptability range for the paste; while, in the case of salami, mortadella or another type of meat, it can comprise an acceptability range for the fatty part of the meat and an acceptability range for the lean part.

The manipulator 1 can comprise a portioner for the food 1a.

The portioner is suitable for cutting the food into portions of a different quality.

It is in data connection with the control unit, which sends the subdivision into sectors and the quality codes of each sector to the portioner, allowing the food to be divided into sectors according to said subdivision.

Finally, the manipulator 1 can comprise a control station from which the operator can at least view the results of the inspection.

The control station is separate and spaced apart from the pick-up member 4, from the inspection device 5 and from the translator 2 to avoid radiation being absorbed by the operator.

It comprises means for connecting data to the control unit; and means for interfacing, such as a screen for displaying at least the results of the inspection and a keyboard or similar for entering data/commands.

The invention comprises a new food 1a manipulation procedure **100** suitable for being implemented by means of the above-described manipulator 1, shown in Fig. 11.

The manipulation procedure 100 can comprise a control phase **110** wherein the operator uses the control station to order, for example, the manipulation and, advantageously, the inspection of food.

Now, the manipulation procedure 100 involves phases commanded by the control unit, which are consequently carried out automatically by the manipulator 1.

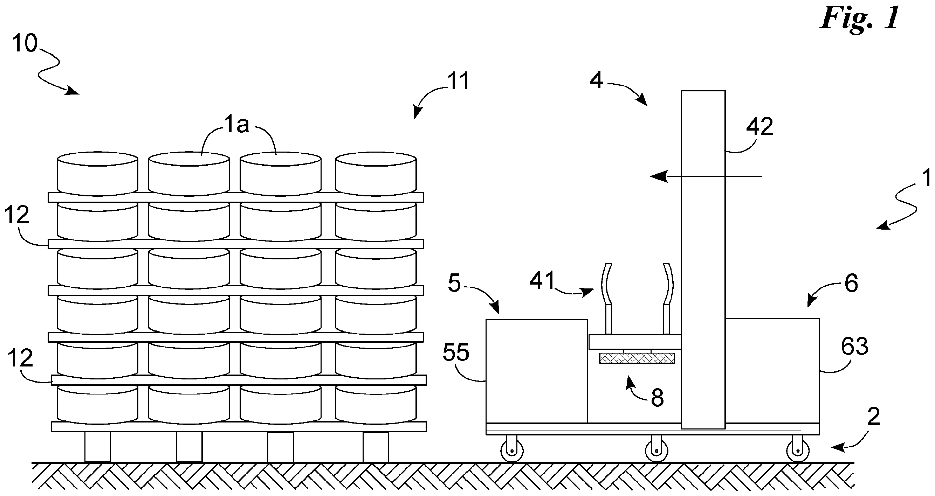

The manipulation procedure 100 can comprise a positioning phase **120** (Fig. 1) of the manipulator 1 in correspondence with the storage station 1b of the selected food 1a.

In this phase 120, the control unit identifies the storage station 1b based on the food database and commands the translator 2 to reach it.

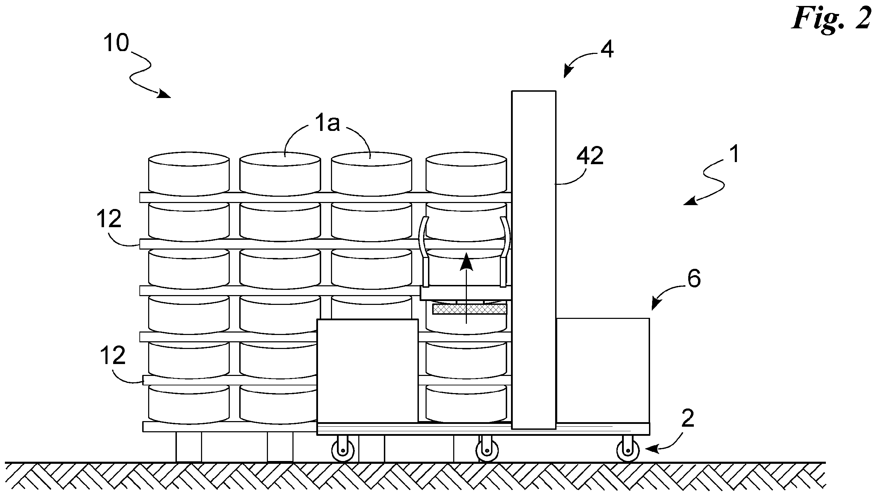

Now, the manipulation procedure 100 can comprise a picking-up phase **130** (Figures 2-4 and 6) of the food 1a from the storage station 1b, depositing it in the analysis station 3.

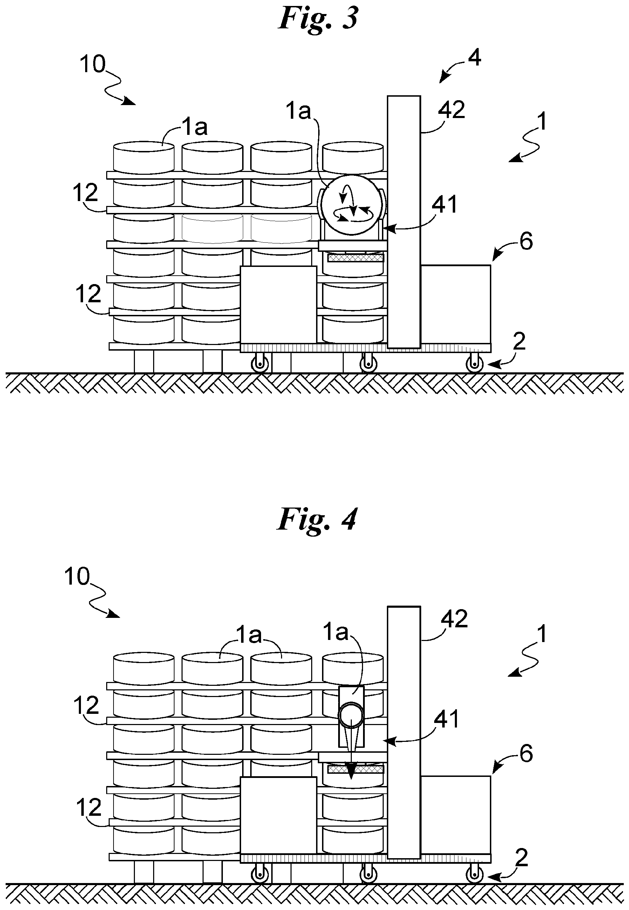

In phase 130, in accordance with indirect kinematics or direct kinematics, the pick-up member carries the gripper 41 in correspondence with the food 1a (Fig. 2); the gripper 41 picks up the food 1a (Fig. 3) and then the pick-up member replaces the food 1a in the analysis station 3 (Figures 4 and 6).

Once the pick-up phase 130 is complete, the manipulation procedure 100 can comprise an inspection phase **140** (Fig. 9), which is carried out by the inspection device 5.

In sequence, the inspection phase 140 comprises at least one acquisition sub-phase **141;** at least one reconstruction sub-phase **142;** and at least one evaluation sub-phase **143** of the food 1a.

The acquisition blocks 51, 52, 53 make the acquisitions in the acquisition sub-phase 141. In particular, the rotation member 54 mutually moves the food 1a and the acquisition blocks 51, 52, 53, which consequently make acquisitions of all of the food 1a at different angles.

The acquisitions are memorised in the food database.

Specifically, the radiological acquisition block 51 performs one or preferably several radiological acquisitions, opportunely at different angles.

Additionally and/or at the same time, the optical acquisition block 52 makes an optical acquisition of the food 1a and/or the thermographic acquisition block 53 makes a thermographic acquisition of the food 1a.

In particular, the following acquisitions are carried out during the acquisition sub-phase 141: radiological, optical and thermographic.

Finally, in the acquisition sub-phase 141, the pressure sensor can measure the weight of the food 1a and consequently memorise said information in the food database.

Completion of the sub-phase 141 is followed by the reconstruction sub-phase 142 wherein the reconstruction system uses the acquisitions made in the previous sub-phase 141 to produce one or more images of the food 1a opportunely memorising said images in the food database.

In particular, the reconstruction system creates a radiological image, and preferably, a tomographic one.

Additionally, it can make an optical and/or thermographic image.

The reconstruction system preferably creates a radiological (preferably tomographic), an optical and a thermographic image of the food 1a.

Completion of the reconstruction sub-phase 142 is followed by the evaluation sub-phase 143, wherein the control unit carries out an inspection of the food 1a based on the presence and, specifically, the position of discontinuities at least in the radiological image, associating a quality code according to said discontinuities.

The evaluation of flaws and the consequent assignment of a quality code can be carried out according to one or more parameters chosen, for example, from the overall size of the flaws, the concentration, the distribution and/or the maximum size of a flaw.

More specifically, the control unit analyses the tomographic image and visually identifies each single discontinuity, even if they are superimposed along one or more directions, and subsequently determines the spatial geometry of each discontinuity.

Even more specifically, the tomographic image allows the control unit to determine the distribution and/or volume of the discontinuities and, consequently, of the flaws in the food 1a. According to said data, the unit can subdivide the food 1a into sectors with a different presence of discontinuities, associating a quality code.

Additionally, the quality code can be determined on the basis of the presence of discontinuities in the optical and/or thermographic image.

The quality code can preferably be determined on the basis of the discontinuities in the tomographic, optical and thermographic images.

In addition, the control unit can determine the quality code of the food by comparing the weight of the food 1a measured by the pressure sensor with the weight of reference and/or weight that the food 1a should have according to the weight variation function.

Once the evaluation of flaws is complete and the quality code has been determined, the control unit memorises the quality code in the food database and, in the case of food 1a being subdivided into sectors, it memorises both the subdivision into sectors of the food 1a and the quality code associated with each sector.

In addition, the unit memorises the inspection date in the food database.

On completion of sub-phase 143 and consequently of phase 140, the manipulation procedure 100 can comprise a marking phase **150** of the food 1a.

In this phase 150, the control unit orders the marker 7 to reproduce the mark on the food 1a corresponding to the specific quality code.

At this point, the manipulation procedure 100 can comprise a replacement phase **160** of the food 1a in the storage station 1 b, which is the same as, or different from the pick-up one.

Said operation is carried out by the pick-up member 4 commanded according to indirect kinematics or direct kinematics.

Phase 160 ends associating the station code of the storage station 1b with the identification code of the food in the food database.

Before the food 1a is in the storage station 1b, the control unit can order the supplementary block 7 to clean the storage station 1b.

Preferably, before the first inspection phase 140, the manipulation procedure 100 can comprise a cleaning phase **170,** wherein the cleaning block 6 removes dust or other granular bodies from the food 1a.

At the end of an inspection phase 140 and, in particular, of the maturing of the food 1a, the manipulation procedure 100 can comprise a portioning phase of the food 1a. In this phase, the control unit sends the results of the last inspection and, in particular, the last sector subdivision and relative quality codes to the portioner, which divides the food, creating portions with different, known qualities.

The invention offers important advantages.

One first important advantage lies in the fact that the manipulator 1 makes the inspection quick and relatively cheap, for example, by bringing everything close to the storage station 1b reducing the movement of the food 1a.

Another advantage is that the inspection device 5 allows the manipulator 1 to carry out the inspection objectively and precisely.

In fact, as the tomographic image is a 3D image, it allows the control unit to identify every single flaw and analyse the extent and, for example, the profile of a cheese form to highlight swellings that alter its shape.

It is possible to increase the highlighting of surface flaws by using optical and/or thermographic images, which show up fungi, mould and bacterial activity.

One advantage is that the 3D images highlight sectors presenting a different quality and flaws.

The inspection is also improved by measuring the weight.

Another advantage is that the manipulator does not require destructive controls.

A non-secondary advantage is that the food database makes it possible to know the station and record of the maturing process.

The invention is subject to variations that come within the scope of the inventive concept described in the appended claims.

In this context, all parts can be replaced with equivalent elements and any materials, shapes and sizes used.

In particular, especially in the case of foods characterised by a non homogenous/uniform structure, the control unit can opportunely comprise a database of reference, stored in the memory.

The database of reference comprises a radiological representation of reference (specifically tomographic) that reproduces a radiological image and, specifically, a tomographic image, of the food 1a without any discontinuities, to be compared (in the sub-phase 143) with the images acquired to identify discontinuities.

In addition, the database of reference can comprise a thermographic and/or optical representation of reference that reproduces an optical and thermographic image of the food 1a respectively, without any discontinuities/flaws.

A further alternative is that the evaluation sub-phase can be carried out by an operator using the control station to display the images acquired by the inspection device 5 on a video, consequently allowing the operator to evaluate the presence of discontinuities and report the quality of the food 1a to the control unit.

In particular, in the case of creating a composed 3D image, as described above, the screen of the control station can display the food 1a on video, visualising the 3D optical image and, in some cases, the superimposition of the 3D optical image with the 3D thermographic image.

If the operator wishes to see inside the food 1a, the control unit commands the control station to display the tomographic on video, keeping the food 1a at the same angle, in other words without varying the operator's viewpoint. Alternatively, if the operator decides to cut the food, the control unit commands the video screen to display a 2D and/or 3D image of the section of the tomographic image, in correspondence with the cut, with the profile, for example, of the optical image in correspondence with the cut.

## Claims

1. A manipulator (1) of foods (1a) in a warehouse (10); said warehouse (10) comprising a plurality of storage stations (1b) wherein at least one is associated with one of said foods (1a); said manipulator (1) being **characterised in that** it comprises
- an analysis station (3) of said food (1a);
- a pick-up member (4) of said food (1a) from said storage station (1b) suitable for positioning said food (1a) in said analysis station (3);
- a translator (2) of said manipulator (1) suitable for positioning said pick-up member (4), said analysis station (3) and said inspection device (5) in correspondence with said storage stations (1b) and
wherein said manipulator (1) comprises
- an inspection device (5) of said food (1a) comprising a radiological acquisition block (51), comprising a source (511) suitable for emitting X-rays striking said food (1a) in said analysis station (3) and a detector (512) positioned opposite said source (511) in relation to said analysis station (3) suitable for receiving said X-rays after said X-rays have crossed said food (1a) making at least one radiological acquisition;
- a reconstruction system suitable for creating a radiological image of said food (1a) based on said at least one radiological acquisition, highlighting any possible flaws in said food (1a);
and wherein said manipulator (1) is automatic and comprises a control unit suitable for carrying out an inspection of said food (1a) based on said at least one radiological acquisition and suitable for commanding, in sequence
- said pick-up member (4) to move said food (1a) from said storage station (1b) to said analysis station (3) positioning said food (1a) between said source (511) and said detector (512);
- said radiological acquisition block (51) to make at least one radiological acquisition;
- said reconstruction system to make said radiological image; and
- said pick-up member (4) to move said food (1a) from said analysis station (3) to said storage station (1b).

2. The manipulator (1) according to claim 1, wherein said control unit is suitable for commanding said translator (2) to position said pick-up member (4) in correspondence with said storage station (1b).

3. The manipulator (1) according to one or more of the preceding claims, wherein said control unit is suitable for inspecting said food (1a) determining the presence of discontinuities in said at least one radiological image and associating at least one quality code with said food (1a), according to said presence of discontinuities, in said at least one radiological image.

4. The manipulator (1) according to one or more of the preceding claims, wherein said inspection device (5) comprises a rotation member suitable for mutually rotating said radiological acquisition block (51) and said food (1a), allowing said radiological acquisition block (51) to make a plurality of radiological acquisitions at different angles in relation to said food (1a); and wherein said reconstruction system creates a tomographic image of said food (1a) based on said radiological acquisitions at different angles, highlighting the spatial geometry of any possible flaw in said food (1a).

5. The manipulator (1) according to the preceding claim, wherein said control unit is suitable for inspecting said food (1a), identifying sectors with different presences of said discontinuities in said tomographic image of said food (1a) and associating different quality codes with said sectors.

6. The manipulator (1) according to one or more of the preceding claims, wherein said inspection device (5) comprises an optical acquisition block (52) suitable for making at least one optical acquisition of said food (1a) in said analysis station (3); and wherein said reconstruction system is suitable for creating an optical image based on said at least one optical acquisition, reproducing the outer surface of said food (1a); and wherein said control unit determines the presence of discontinuities in said optical image and in said radiological image, and associates said at least one quality code with said food (1a), according to said presence of discontinuities in said optical image and in said radiological image.

7. The manipulator (1) according to the preceding claim, wherein said optical acquisition block (52) comprises at least two optical video cameras suitable for making optical acquisitions of said food (1a) at different angles; and wherein said reconstruction system is suitable for creating a three-dimensional optical image of said food (1a) based on said optical acquisitions at different angles (1a).

8. The manipulator (1) according to one or more of the preceding claims, wherein said inspection device (5) comprises a thermographic acquisition block (53) suitable for making at least one thermographic acquisition of said food (1a) in said analysis station (3); wherein said reconstruction system is suitable for creating a thermographic image (53) of said food (1a) based on said at least one thermographic acquisition; and wherein said control unit determines the presence of discontinuities in said thermographic image and in said radiological image and associates said at least one quality code with said food (1a), according to the presence of discontinuities in said thermographic image and in said radiological image.

9. The manipulator (1) according to one or more of the preceding claims, wherein said control unit comprises a food database associating with each of said foods (1a) in said warehouse (10), an identification code of said food (1a); a station code identifying the storage station (1b) of said food (1a) in said warehouse (10); and, for each of said inspections carried out on said food (1a), said images of said food (1a) and said at least one quality code.

10. The manipulator (1) according to one or more of the preceding claims, wherein said inspection device (5) comprises a pressure sensor placed in correspondence with said analysis station (3) suitable for measuring the weight of said food (1a) positioned in said analysis station (3).

11. A manipulation procedure (100) of foods (1a) in a warehouse (10); said warehouse (10) comprising a manipulator (1) of foods (1a) in a warehouse (10) and a plurality of storage stations (1b) each of which is associated with one of said foods (1a); said manipulation procedure (100) **being characterised in that** it comprises
- a positioning phase (120) of said manipulator (1) in correspondence with said storage station (1b) of one of said foods (1a);
- a pick-up phase (130) wherein said food (1a) is picked up from said storage station (1b) and positioned in an analysis station (3);
- an inspection phase (140) wherein
∘ at least one radiological acquisition is made of said food (1a) in said analysis station (3),
∘ at least one radiological image is generated based on said at least one radiological acquisition,
∘ said presence of discontinuities is determined in said at least one radiological image; and
- there is a replacement phase (160), wherein said food (1a) is picked up from said analysis station (3) and positioned in said storage station (1b).

## Patentansprüche

1. Ein Manipulator (1) von Lebensmitteln (1a) in einem Lager (10); wobei das genannte Lager (10) eine Vielzahl von Lagerstationen (1b) umfasst, von denen mindestens eine einem der genannten Lebensmittel (1a) zugeordnet ist; wobei der genannte Manipulator (1) **dadurch gekennzeichnet ist, dass** er Folgendes umfasst:
- eine Analysestation (3) für das genannte Lebensmittel (1a);
- ein Aufnahmeglied (4) für das genannte Lebensmittel (1a) zur Entnahme aus der genannten Lagerstation (1b), das geeignet ist, das genannte Lebensmittel (1a) in der genannten Analysestation (3) zu positionieren;
- einen Umsetzer (2) des genannten Manipulators (1), der geeignet ist, das genannte Aufnahmeglied(4), die genannte Analysestation (3) und das genannte Inspektionsgerät (5) auf den genannten Lagerstationen (1b) zu positionieren, wobei der genannte Manipulator (1) Folgendes umfasst:
- ein Inspektionsgerät (5) des genannten Lebensmittels (1a), umfassend einen radiologischen Erfassungsblock (51), umfassend eine Quelle (511), die geeignet ist, auf das genannte Lebensmittel (1a) in der genannten Analysestation (3) treffende Röntgenstrahlen zu emittieren, und einen im Verhältnis zu der genannten Analysestation (3) gegenüber der genannten Quelle (511) positionierten Detektor (512), der geeignet ist, die genannten Röntgenstrahlen zu empfangen, nachdem die genannten Röntgenstrahlen das genannte Lebensmittel (1a) überquert, und mindestens eine radiologische Erfassung durchgeführt haben;
- ein Rekonstruktionssystem, das geeignet ist, ein radiologisches Bild des genannten Lebensmittels (1a) basierend auf der genannten mindestens einen radiologischen Erfassung zu erzeugen und dabei jegliche möglichen Mängel in dem genannten Lebensmittel (1a) zu markieren;
**und** wobei der genannte Manipulator (1) automatisch betrieben wird und ein Steuergerät umfasst, das geeignet ist, eine Inspektion des genannten Lebensmittels (1a) basierend auf der genannten mindestens einen radiologischen Erfassung auszuführen und geeignet ist, der Reihe nach Folgendes zu steuern:
- das genannte Aufnahmeglied (4) zum Befördern des genannten Lebensmittels (1a) von der genannten Lagerstation (1b) zu der genannten Analysestation (3), so dass das genannte Lebensmittel (1a) zwischen der genannten Quelle (511) und dem genannten Detektor (512) positioniert wird;
- den genannten radiologischen Erfassungsblock (51), um mindestens eine radiologische Erfassung vorzunehmen;
- das genannte Rekonstruktionssystem, um das genannte radiologische Bild zu erzeugen; und
- das genannte Aufnahmeglied (4), um das genannte Lebensmittel (1a) von der genannten Analysestation (3) zu der genannten Lagerstation (1b) zu befördern.

2. Manipulator (1) nach Anspruch 1, bei dem das genannte Steuergerät geeignet ist, den genannten Umsetzer (2) zu steuern, um das genannte Aufnahmeglied (4) auf der genannten Lagerstation (1b) zu positionieren.

3. Manipulator (1) nach einem oder mehreren der vorangegangenen Ansprüche, bei dem das genannte Steuergerät geeignet ist, das genannte Lebensmittel (1a) zu inspizieren und dabei das Auftreten von Diskontinuitäten in dem genannten mindestens einen radiologischen Bild festzustellen und entsprechend dem Auftreten von Diskontinuitäten in dem genannten mindestens einen radiologischen Bild dem genannten Lebensmittel (1a) mindestens einen Qualitätscode zuzuordnen.

4. Manipulator (1) nach einem oder mehreren der vorangegangenen Ansprüche, bei dem das genannte Inspektionsgerät (5) ein Drehglied umfasst, das geeignet ist, den genannten radiologischen Erfassungsblock (51) und das genannte Lebensmittel (1a) gegeneinander zu drehen und es dem genannten radiologischen Erfassungsblock (51) so zu gestatten, eine Vielzahl von radiologischen Erfassungen aus verschiedenen Winkeln in Bezug auf das genannte Lebensmittel (1a) vorzunehmen; und bei dem das genannte Rekonstruktionssystem ein tomographisches Bild des genannten Lebensmittels (1a) basierend auf den genannten radiologischen Erfassungen aus verschiedenen Winkeln erzeugt und dabei die räumliche Geometrie jeglicher möglicher Mängel in dem genannten Lebensmittel (1a) markiert.

5. Manipulator (1) nach dem vorangegangenen Anspruch, bei dem das genannte Steuergerät geeignet ist, das genannte Lebensmittel (1a) zu inspizieren und dabei Sektoren mit unterschiedlichem Auftreten der genannten Diskontinuitäten in dem genannten tomographischen Bild des genannten Lebensmittels (1a) festzustellen und den genannten Sektoren verschiedene Qualitätscodes zuzuordnen.

6. Manipulator (1) nach einem oder mehreren der vorangegangenen Ansprüche, bei dem das genannte Inspektionsgerät (5) einen optischen Erfassungsblock (52) umfasst, der geeignet ist, mindestens eine optische Erfassung des genannten Lebensmittels (1a) in der genannten Analysestation (3) vorzunehmen; und bei dem das genannte Rekonstruktionssystem geeignet ist, ein optisches Bild basierend auf der genannten mindestens einen optischen Erfassung zu erzeugen und damit die Außenfläche des genannten Lebensmittels (1a) wiederzugeben; und bei dem das genannte Steuergerät das Auftreten von Diskontinuitäten in dem genannten optischen Bild und dem genannten radiologischen Bild feststellt und den genannten mindestens einen Qualitätscode dem genannten Lebensmittel (1a) entsprechend dem Auftreten von Diskontinuitäten in dem genannten optischen Bild und in dem genannten radiologischen Bild zuordnet.

7. Manipulator (1) nach dem vorangegangenen Anspruch, bei dem der genannte optische Erfassungsblock (52) mindestens zwei optische Videokameras umfasst, die geeignet sind, optische Erfassungen des genannten Lebensmittels (1a) aus verschiedenen Winkeln vorzunehmen; und bei dem das genannte Rekonstruktionssystem geeignet ist, basierend auf den genannten optischen Erfassungen aus verschiedenen Winkeln (1a) ein dreidimensionales optisches Bild des genannten Lebensmittels (1a) zu erzeugen.

8. Manipulator (1) nach einem oder mehreren der vorangegangenen Ansprüche, bei dem das genannte Inspektionsgerät (5) einen thermografischen Erfassungsblock (53) umfasst, der geeignet ist, mindestens eine thermografische Erfassung des genannten Lebensmittels (1a) in der genannten Analysestation (3) vorzunehmen; wobei das genannte Rekonstruktionssystem geeignet ist, ein thermografisches Bild (53) des genannten Lebensmittels (1a) basierend auf der genannten mindestens einen thermografischen Erfassung zu erzeugen; und wobei das genannte Steuergerät das Auftreten von Diskontinuitäten in dem genannten thermografischen Bild und in dem genannten radiologischen Bild feststellt und entsprechend dem Vorliegen von Diskontinuitäten in dem genannten thermografischen Bild und dem genannten radiologischen Bild dem genannten Lebensmittel (1a) mindestens einen Qualitätscode zuordnet.

9. Manipulator (1) nach einem oder mehreren der vorangegangenen Ansprüche, bei dem das genannte Steuergerät eine Datenbank umfasst, die jedem der genannten Lebensmittel (1a) in dem genannten Lager (10) einen Identifizierungscode des genannten Lebensmittels (1a); einen die Lagerstation (1b) des genannten Lebensmittels (1a) in dem genannten Lager (10) identifizierenden Stationscode; und für jede der genannten auf dem genannten Lebensmittel (1a) ausgeführten Inspektionen, die genannten Bilder des genannten Lebensmittels (1a) und den genannten mindestens einen Qualitätscode zuordnet.

10. Manipulator (1) nach einem oder mehreren der vorangegangenen Ansprüche, bei dem das genannte Inspektionsgerät (5) einen auf der genannten Analysestation (3) positionierten Drucksensor umfasst, der geeignet ist, das Gewicht des in der genannten Analysestation (3) positionierten genannten Lebensmittels (1a) zu messen.

11. Handhabungsverfahren (100) von Lebensmitteln (1a) in einem Lager (10); wobei das genannte Lager (10) einen Manipulator (1) für Lebensmittel (1a) in einem Lager (10) und eine Vielzahl von Lagerstationen (1b) umfasst, von denen jede einem der genannten Lebensmittel (1a) zugeordnet ist; wobei das genannte Handhabungsverfahren (100) **dadurch gekennzeichnet ist, dass** es Folgendes umfasst:
- einen Positionierungsschritt (120) des genannten Manipulators (1) auf der genannten Lagerstation (1b) für eines der genannten Lebensmittel (1a);
- einen Aufnahmeschritt (130), bei dem das genannte Lebensmittel (1a) von der genannten Lagerstation (1b) aufgenommen und in einer Analysestation (3) positioniert wird;
- einen Inspektionsschritt (140), bei dem:
∘ mindestens eine radiologische Erfassung des genannten Lebensmittels (1a) in der genannten Analysestation (3) erfolgt,
∘ mindestens ein radiologisches Bild basierend auf der genannten, mindestens einen radiologischen Erfassung erzeugt wird,
∘ das genannte Auftreten von Diskontinuitäten in dem genannten mindestens einen radiologischen Bild festgestellt wird; und
- ein Ersetzungsschritt (160) erfolgt, bei dem das genannte Lebensmittel (1a) aus der genannten Analysestation (3) entnommen und in dem genannten Lagerbereich (1b) positioniert wird.

## Revendications

1. Manipulateur (1) d'aliments (1a) dans un entrepôt (10) ; ledit entrepôt (10) comprenant une pluralité d'emplacements de stockage (1b) dont au moins un est associé à l'un desdits aliments (1a) ; ledit manipulateur (1) **étant caractérisé en ce qu'il** comprend
- un poste d'analyse (3) pour ledit aliment (1a) ;
- un élément de prise (4) pour ledit aliment (1a) depuis ledit emplacement de stockage (1b) destiné à positionner ledit aliment (1a) dans ledit poste d'analyse (3) ;
- un transposeur (2) dudit manipulateur (1) destiné à positionner ledit élément de prise (4), ledit poste d'analyse (3) et ledit dispositif d'inspection (5) en correspondance desdits emplacements de stockage (1b) et dans lequel ledit manipulateur (1) comprend
- un dispositif d'inspection (5) dudit aliment (1a) comportant un module d'acquisition radiologique (51), comprenant une source (511) destinée à émettre des rayons X atteignant ledit aliment (1a) dans ledit poste d'analyse (3) et un détecteur (512) positionné de manière opposée à ladite source (511) par rapport audit poste d'analyse (3), destiné à recevoir lesdits rayons X après que ceux-ci aient traversés ledit aliment (1a) pour effectuer au moins une acquisition radiologique ;
- un système de reconstruction destiné à créer une image radiologique dudit aliment (1a) sur base de l'au moins une acquisition radiologique, mettant en évidence tout défaut possible dans ledit aliment (1a) ;
**et** dans lequel ledit manipulateur (1) est automatique et comprend une unité de contrôle conçue pour réaliser une inspection dudit aliment (1a) sur base de ladite au moins une acquisition radiologique et conçue pour commander, séquentiellement
- ledit élément de prise (4) pour déplacer ledit aliment (1a) dudit emplacement de stockage (1b) vers ledit poste d'analyse (3) et le positionner entre ladite source (511) et ledit détecteur (512) ;
- ledit module d'acquisition radiologique (51) pour réaliser au moins une acquisition radiologique ;
- ledit système de reconstruction pour préparer ladite image radiologique, et
- ledit élément de prise (4) pour déplacer ledit aliment (1a) dudit poste d'analyse (3) vers ledit emplacement de stockage (1a).

2. Manipulateur (1) selon la revendication 1, dans lequel ladite unité de contrôle est conçue pour commander ledit transposeur (2) pour positionner ledit élément de prise (4) en correspondance dudit emplacement de stockage (1b).

3. Manipulateur (1) selon l'une ou plusieurs des revendications précédentes, dans lequel ladite unité de contrôle est conçue pour inspecter ledit aliment (1a) par la détermination de présence de discontinuités dans ladite au moins une image radiologique et l'association d'au moins un code qualité audit aliment (1a), en fonction de la présence de discontinuités dans ladite au moins une image radiologique.

4. Manipulateur (1) selon l'une ou plusieurs des revendications précédentes, dans lequel ledit dispositif d'inspection (5) comprend un élément de rotation destiné à la rotation mutuelle dudit module d'acquisition radiologique (5) et dudit aliment (1a), permettant audit module d'acquisition radiologique (5) d'effectuer une pluralité d'acquisitions radiologiques à différents angles par rapport audit aliment (1a); et dans lequel ledit système de reconstruction crée une image tomographique dudit aliment (1a) sur base desdites acquisitions radiologiques à différents angles, mettant en évidence la géométrie spatiale de tout défaut possible dans ledit aliment (1a).

5. Manipulateur (1) selon la revendication précédente, dans lequel ladite unité de contrôle est conçue pour inspecter ledit aliment (1a), par l'identification de secteurs avec des présences différentes desdites discontinuités dans ladite image tomographique dudit aliment (1a) et l'association de codes de qualité différents audits secteurs.

6. Manipulateur (1) selon l'une ou plusieurs des revendications précédentes, dans lequel le dispositif d'inspection (5) comprend un module d'acquisition optique (52) conçu pour réaliser au moins une acquisition optique dudit aliment (1a) dans ledit poste d'analyse (3); et dans lequel ledit système de reconstruction est conçu pour créer une image optique sur base de ladite au moins une acquisition optique, pour reproduire la surface extérieure dudit aliment (1a) ; et dans lequel ladite unité de contrôle détermine la présence de discontinuités dans ladite image optique et dans ladite image radiologique, et associe ledit au moins code qualité avec ledit aliment (1a), en fonction de ladite présence de discontinuités dans ladite image optique et dans ladite image radiologique.

7. Manipulateur (1) selon la revendication précédente, dans lequel ledit module d'acquisition optique (52) comprend au moins deux caméras vidéo optiques destinées à réaliser l'acquisition optique dudit aliment (1a) à différents angles ; et dans lequel ledit système de reconstruction est conçu pour créer une image optique tridimensionnelle dudit aliment (1a) sur base desdites acquisitions optiques à différents angles.

8. Manipulateur (1) selon l'une ou plusieurs des revendications précédentes, dans lequel ledit dispositif d'inspection (5) comprend un module d'acquisition thermographique (53) conçu pour réaliser au moins une acquisition thermographique dudit aliment (1a) dans ledit poste d'analyse (3) ; et dans lequel ledit système de reconstruction est conçu pour créer une image thermographique (53) dudit aliment (1a) sur base de ladite au moins une acquisition thermographique ; et dans lequel ladite unité de contrôle détermine la présence de discontinuités dans ladite image thermographique et dans ladite image radiologique, et associe ledit au moins code qualité avec ledit aliment (1a), en fonction de ladite présence de discontinuités dans ladite image thermographique et dans ladite image radiologique.

9. Manipulateur (1) selon l'une ou plusieurs des revendications précédentes, dans lequel ladite unité de contrôle comprend une banque de données des aliments associant pour chacun desdits aliments (1a) dans ledit entrepôt (10), un code d'identification dudit aliment (1a); un code d'emplacement identifiant l'emplacement de stockage (1b) dudit aliment (1a) dans ledit entrepôt (10) ; et pour chacune desdites inspections réalisées sur ledit aliment (1a), lesdites images de l'aliment (1a) et ledit au moins un code qualité.

10. Manipulateur (1) selon l'une ou plusieurs des revendications précédentes, dans lequel ledit dispositif d'inspection (5) comprend un capteur de pression placé en correspondance avec ledit poste d'analyse (3), destiné à mesurer le poids dudit aliment (1a) positionné dans ledit poste d'analyse (3).

11. Procédure de manipulation (100) d'aliments (1a) dans un entrepôt (10); ledit entrepôt (10) comprenant un manipulateur (1) d'aliments (1a) dans l'entrepôt (10) et une pluralité d'emplacements de stockage (1b), chacun étant associé à un desdits aliments (1a) ; ladite procédure de manipulation (100) **étant caractérisée en ce qu'**elle comprend
- une phase de positionnement (120) dudit manipulateur (1) en correspondance avec ledit emplacement de stockage (1b) de l'un desdits aliments (1a);
- une phase de prise (130) dans laquelle ledit aliment (1a) est prélevé dudit emplacement de stockage (1b) et positionné dans un poste d'analyse (3) ;
- une phase d'inspection (140) dans laquelle
∘ au moins une acquisition radiologique dudit aliment (1a) est réalisée dans ledit poste d'analyse (3),
∘ au moins une image radiologique est générée sur base de l'au moins une acquisition radiologique,
∘ ladite présence de discontinuités est déterminée dans ladite au moins une image radiologique, et
- une phase de repositionnement (160), dans laquelle ledit aliment (1a) est prélevé du poste d'analyse (3) et repositionné dans ledit emplacement de stockage (10).
